(19) Europäisches Patentamt
European Patent Office
Office européen des brevets

(11) EP 0 676 415 B1

(12) **EUROPÄISCHE PATENTSCHRIFT**

(45) Veröffentlichungstag und Bekanntmachung des Hinweises auf die Patenterteilung:
**02.06.1999 Patentblatt 1999/22**

(51) Int Cl.$^6$: **C08B 11/20**, C08B 37/00

(21) Anmeldenummer: **95104945.1**

(22) Anmeldetag: **03.04.1995**

(54) **Verfahren zur Herstellung niedermolekularer Polysaccharidether**

Process for producing low molecular weight polysaccharide ethers

Procédé de préparation d'éthers de polysaccharides de bas poids moléculaire

(84) Benannte Vertragsstaaten:
**DE FR GB IT NL**

(30) Priorität: **05.04.1994 DE 4411681**

(43) Veröffentlichungstag der Anmeldung:
**11.10.1995 Patentblatt 1995/41**

(73) Patentinhaber: **Clariant GmbH**
**65929 Frankfurt am Main (DE)**

(72) Erfinder:
• **Dönges, Reinhard, Dr.**
**D-65812 Bad Soden (DE)**

• **Hilbig, Josef, Dr.**
**D-65232 Taunusstein (DE)**

(56) Entgegenhaltungen:
**EP-A- 0 465 992      FR-A- 2 179 961**

• **DATABASE WPI Week 8615 Derwent Publications Ltd., London, GB; AN 86-096642 & JP-A-61 040 303 (FUJI SPINNING KK), 26.Februar 1986**

**Beschreibung**

Der Begriff "Polysaccharide" ist eine Sammelbezeichnung für makromolekulare Kohlenhydrate, deren Molekül aus einer großen Zahl glycosidisch miteinander verknüpfter Monosaccharidmoleküle besteht. Hinsichtlich der Klassifizierung der Polysaccharide werden diese in Homo-Polysaccharide und Hetero-Polysaccharide eingeteilt. Während die Homo-Polysaccharide nur eine Art von Baustein aufweisen, bestehen die Hetero-Polysaccharide aus verschiedenartigen Monomer-Einheiten. Zu den Homo-Polysacchariden gehören die als Reservestoffe wichtigen Kohlehydrate Stärke, Glycogen sowie das Struktur-Polymere Cellulose, das als Polykondensationsprodukt der D-Glucose aufgefaßt werden kann, Chitin sowie die Alginsäure und Alginate. Zu den Hetero-Polysacchariden rechnet man u.a. die Pektine, Mannane, Galactane, Galactomannane, wie z.B. den Guar-Gum, Agar-Agar und die Polyosen des Holzes.

Nicht nur die Polysaccharide sondern vor allem auch die entsprechenden Polysaccharidether finden als Verdickungsmittel, Emulsionsstabilisatoren und Bindemittel, z.B. in der Medizin, Pharmazie, Kosmetik-, Papier-, Textilund Druck-industrie, Verwendung und werden als Hilfsmittel bei der Herstellung von Polymerisaten oder zur Zubereitung von sogenannten Fluids in der Bohrlochtechnik der Erdöl- und Erdgasgewinnung eingesetzt.

Die technologischen Eigenschaften der Polysaccharidether hängen stark von deren Molmasse bzw. der Viskosität ihrer Lösungen ab. Die Moimasse der Polymeren ergibt sich dabei aus dem Polymerisationsgrad und der Molmasse der Polymergrundeinheit (= Grundmolmasse). Während hochmolekulare Polysaccharidether dort eingesetzt werden, wo hochviskose, stark verdickte Lösungen gefragt sind, werden von den niedermolekularen Polysaccharidethern höher konzentrierte, aber noch nicht zu viskose Lösungen dort eingesetzt, wo Klebkraft und Filmbildungseigenschaften von Bedeutung sind.

Niedermolekulare Polysaccharidether, die im Vergleich zu mittel- und hochmolekularen Polysaccharidethern auch eine niedrige Viskosität aufweisen, sind grundsätzlich auf zwei verschiedenen Wegen herstellbar. Entweder geht man von einem niedermolekularen Polysaccharid aus und verethert dieses nach vorhergehender Alkalisierung oder man depolymerisiert einen fertigen höhermolekularen Polysaccharidether bis zu der gewünschten Molmasse ab.

Es hat sich gezeigt, daß die niedrige Molmasse eines Polysaccharidethers nur bedingt dadurch eingestellt werden kann, daß für die Herstellung des Ethers ein entsprechend niedermolekulares Ausgangspolysaccharid gewählt wird. Das macht es in der Praxis notwendig, nach der Herstellung des Polysaccharidethers den Polymerisationsgrad (DP) - und damit die Molmasse - durch gezielte depolymerisierende Maßnahmen auf den gewünschten niedrigen Wert einzustellen. In der Regel werden zu diesem Zweck oxidative chemische Methoden angewendet.

Bei der Herstellung der Polysaccharidether wird zur Einstellung der niedrigen Molmasse des Polysaccharidethers nach dem Stand der Technik in der Regel wäßrige Wasserstoffperoxidlösung verwendet (= oxidativer Abbau). Der Polysaccharidether wird nach der Zugabe der Wasserstoffperoxidlösung einige Zeit bei erhöhter Temperatur gehalten. Die Menge an Wasserstoffperoxid, die Temperatur und die Dauer der Behandlung werden je nach gewünschter Lösungsviskosität des Endprodukts gewählt. Vorteilhafterweise erfolgt die Behandlung bei einem alkalischen pH-Wert.

Es gibt Verfahren, bei denen der Polysaccharidether trocken oder wasserfeucht mit wäßriger Wasserstoffperoxidlösung behandelt wird. Die DE-OS-1 543 116 beschreibt ein solches Verfahren. Trockene oder noch wasserfeuchte Celluloseether werden mit wäßriger Wasserstoffperoxidlösung zu einem Teig verknetet, auf einen pH-Wert zwischen 9 und 11 eingestellt, bei einer Temperatur im Bereich von 100 bis 250°C einige Zeit weiter geknetet und dann getrocknet. Dieses Verfahren hat die Nachteile, daß die Celluloseether sich verfärben, so daß sie wieder gebleicht werden müssen; ein Teil des Wasserstoffperoxids unverbraucht bleibt, so daß die Produkte im Verlaufe der Zeit weiter depolymerisieren und ihre Lösungsviskositäten abnehmen und außerdem, daß sich durch oxidative Bildung von Carboxylgruppen ein saurer pH-Wert einstellen kann, so daß gegebenenfalls neutralisierende Substanzen zugesetzt werden müssen.

Die Polysaccharidether können auch mit einem organischen, meist wassermischbaren Lösungsmittel befeuchtet oder darin zu einer Suspension aufgerührt zur Behandlung kommen. Dabei werden Befeuchtungs- bzw. Suspensionsmittel im Verhältnis von 1:1 bis 50:1, bezogen auf den trockenen Polysaccharidether, zur Anwendung gebracht. So beschreibt die französische Patentschrift Nr. 1 448 567 ein Verfahren zur Depolymerisation von Carboximethylcellulose (CMC), bei dem der frisch hergestellte Carboximethylcelluloseether, suspendiert in der etwa 10fachen Menge eines Gemisches von Ethanol und Benzol und in Gegenwart von rund 0,3 mol Natriumhydroxid (bezogen auf die zuvor eingesetzte Cellulose), mit einer 35 gew.-%igen Wasserstoffperoxidlösung behandelt wird.

Ein Nachteil des Einsatzes von Wasserstoffperoxid ist, daß bei seiner Verwendung ein erheblicher Teil nicht wirksam ist, weil er sich zu Sauerstoff und Wasser zersetzt. Der Sauerstoff aber kann bei den Verfahren, wo organische Lösungsmittel, wie Ethanol, Benzol, Isopropylalkohol und ähnliche im Einsatz sind, explosionsfähige Gemische mit den Lösungsmitteldämpfen bilden, falls er nicht aus dem Reaktor entweichen kann.

Tabelle 1 zeigt Beispiele für die Zusammensetzung der Dampfraumatmosphäre beim oxidativen Abbau von Carboximethylcellulose mittels Wasserstoffperoxidlösung nach dem Stand der Technik.

Die US-A-2 749 336 offenbart ein Verfahren zur Herstellung von Celluloseethern mit einer niederen Molmasse durch Einsatz von Oxidationsmitteln, wie den Hyposäuren der Halogene, Peroxiden oder Perjodaten. In dem dort beschriebenen Verfahren wird bereits die Alkalicellulose mit dem oxidierenden Agens behandelt. Anschließend wird die so vorbehandelte Alkalicellulose in ein Suspensionsmittel, zum Beispiel Isopropanol, gegeben und durch Zugabe des gewünschten Veretherungsmittels, zum Beispiel Monochloressigsäure, verethert.

Die tschechischen Autoren Slama, O. und Prikryl, Z. beschreiben den Viskositätsabbau von Carboximethylcellulose- und Kartoffelstärke-Lösung mit Natriumdithionit und Wasserstoffperoxid (Pr. Vyzk. Ustavu Geol. Inz. 37 (1981) 121 bis 141). Ihre kinetischen Untersuchungen betreffen Fluids für das sogenannte "Fracturing" in der Erdöl- und Gasfördertechnik. Für den gleichen Zweck werden in der US-A 4 552 674 Alkalimetallsalze der Peroxomono- und Dischwefelsäure verwendet.

Die DE-A-3 016 561 erwähnt den Abbau von Etherderivaten des Endosperms aus dem Samen von "Cassia occidentalis" mit anorganischen Peroxiden oder Wasserstoffperoxid, führt aber kein Beispiel für ein anorganisches Peroxid an.

Ein gemeinsames Merkmal der vorgenannten Veröffentlichungen ist, daß die neben wäßrigem Wasserstoffperoxid noch verwendeten Peroxide ausschließlich in gelöster Form zum Einsatz kommen. Die Verwendung von wäßrigen Peroxidlösungen hat allgemein den Nachteil, daß das eingebrachte Wasser vom oxidativ abgebauten Polysaccharidether aufgenommen wird, wodurch dessen Aufarbeitung durch erhöhte Neigung zum Verkleben, Verklumpen, Verkleistern und Bildung "verbrannter" Partikel beim Trocknen sehr schwierig oder sogar unmöglich gemacht wird.

Aufgabe der vorliegenden Erfindung ist es, ein Verfahren zur Herstellung von niedermolekularen Polysacchariethern, d.h. solchen mit niederen Polymer-Molmassen zur Verfügung zu stellen, bei dem die Bildung von explosionsfähigen Dampfatmosphären und die Einbringung von zusätzlichem Wasser ganz oder zumindest teilweise vermieden werden.

Gegenstand der Erfindung ist ein Verfahren zur Herstellung niedermolekularer Polysaccharidether durch oxidativen Abbau höhermolekularer Polysaccharidether in Maische oder in Suspension, das dadurch gekennzeichnet ist, daß man den höhermolekularen Polysaccharidether in Maische oder in Suspension vorlegt und ein Perborat oder eine Mischung aus Perborat und Perborataktivator zufügt und den oxidativen Abbau bei einer Temperatur zwischen 25 und 90°C, bevorzugt 50 und 80°C durchführt.

Als Ausgangsmaterial dienen höhermolekulare Polysaccharidether, die, je nach Veretherungsgrad, eine mittlere Molmasse $M_\eta$ von 10000 bis 350000 g/mol haben. Das entspricht einer Lösungsviskosität im Bereich von 3 bis über 100000 mPa·s (gemessen in einer 1,9 gew.-%igen wäßrigen Lösung bei 20°C mit einem Höppler-Kugelfallviskosimeter). Zur Ermittlung der Molmasse der Polymeren werden Lösungen der Polysaccharidether mit dem Ubbelohde-Kapillarviskosimeter vermessen und dann nach Staudinger die Molmasse errechnet (siehe z.B. Krässig, Hans A., "Cellulose: Structure, accessibility and reactivity" Gordon & Breach Science Publishers, Yverdon, Schweiz, 1993, S. 44 ff).

Unter der Bezeichnung Polysaccharidether werden die Ether der eingangs genannten Polysaccharide verstanden, insbesondere die der Cellulose, der Stärke und der Galactomannane.

Geeignete Celluloseether sind sowohl ionische als auch nicht ionische Celluloseether, wie Carboxialkylcelluloseether, z.B. Carboximethylcellulose (CMC) bzw. Hydroxialkylcelluloseether, z.B. Hydroxiethylcellulose (HEC) und die sich von diesen ableitenden Mischether, z.B. Carboximethylhydroxiethylcellulose (CMHEC) oder Alkylhydroxialkylcelluloseether, z.B. Methylhydroxipropylcellulose (MHPC) oder Methylhydroxiethylcellulose (MHEC) oder Alkyloxihydroxialkyl-hydroxialkylcellulosen, z.B. Alkyloxihydroxipropyl-hydroxialkylcelluloseether oder ternäre Ether, wie Methylhydroxiethylcarboximethylcellulose (MHECMC) sowie Sulfoalkylcelluloseether, z.B. Sulfoethylcellulose (SEC) und deren Mischether, wie Carboxialkylsulfoalkylcellulose, z.B. Carboximethylsulfoethylcellulose (CMSEC) oder der ternäre Ether Methylhydroxiethylsulfoethylcellulose (MHESEC) oder Hydroxialkylsulfoalkylcelluloseether, z.B. Hydroxiethylsulfoethylcellulose (HESEC). Die vorgenannten Celluloseether enthalten als Alkylgruppen üblicherweise eine $C_1$-$C_4$-Alkylgruppe, bevorzugt die Methyl- und/oder Ethylgruppe.

Bei den erfindungsgemäß eingesetzten Stärkeethern handelt es sich beispielsweise um Hydroxipropylstärke (HPS). Aber auch Carboximethylstärke (CMS) oder Hydroxiethylstärke (HES) lassen sich erfindungsgemäß depolymerisieren. Das erfindungsgemäße Verfahren eignet sich aber auch zur Depolymerisation von Galactomannanethern, wie Carboximethylhydroxipropyl-Guar-Gum.

Der oxidative Abbau der höhermolekularen Polysaccharidether erfolgt durch Zugabe von Perboraten. Perborate ist die Bezeichnung für Borate, in denen die Disauerstoffgruppe -O-O- vorhanden ist. Besonders geeignet sind Alkaliperborate z.B. Natriumperborat. Aber auch Erdalkaliperborate, wie Calciumperborat oder Magnesiumperborat, können verwendet werden. Natriumperborat wird als Natriumperborat-Tetrahydrat oder als Natriumperborat-Monohydrat eingesetzt.

Die Perborate können als verdünnte wäßrige Lösung, als Kristallsuspension oder als kristalliner Feststoff eingesetzt werden. Die Konzentration der wäßrigen Lösung beträgt im allgemeinen bis 2,5 Gew.-%, bezogen auf das Perborat.

Der Einsatz der wäßrigen Lösung erfolgt bevorzugt, wenn der höhermolekulare Polysaccharidether nur mit wenig Perborat behandelt werden soll.

Als Suspensionsmittel für die festen Perborate eignen sich Flüssigkeiten, die weitgehend inert sind, das heißt nicht selbst vom Perborat oxidativ angegriffen werden und auch keinen nachteiligen Einfluß auf den oxidativen Abbau der Polysaccharidether ausüben. Beispielhaft für derartige Suspensionsmittel seien genannt: Wasser, wassermischbare organische Lösungsmittel, wie $C_1$-$C_6$-Alkohole, Ketone oder Ether sowie wäßrige Mischungen dieser vorgenannten Suspensionsmittel. Zweckmäßigerweise wird die Kristallsuspension erst kurz vor deren Verwendung angesetzt. Das Verhältnis Suspensionsmittel zu Perborat beträgt normalerweise 2:1 bis 15:1. Als Suspensionsmittel werden vorteilhafterweise solche verwendet, die bei der Herstellung der Polysaccharidether in der Maische bzw. Suspension eingesetzt wurden. Hierbei handelt es sich normalerweise um $C_1$-$C_6$-Alkohole, wie Ethanol, Isopropanol oder tert. Butanol, Ether, z.B. Dimethylglykol oder Ketone, wie Aceton sowie wäßrige Mischungen dieser Suspensionsmittel. Es kann aber auch Wasser als Suspensionsmittel dienen.

In einer weiteren Ausführungsform des erfindungsgemäßen Verfahrens werden die Perborate als Feststoffe eingesetzt. Es hat sich gezeigt, daß mit dieser Zugabeform ein zusätzliches Einbringen der vorgenannten Suspensionsmittel, insbesondere von Wasser, vermieden werden kann.

Die erfindungsgemäß verwendeten Perborate können auch in Kombination mit Perborataktivatoren eingesetzt werden, wie sie üblicherweise in der Waschmittelindustrie eingesetzt werden. Zu diesen, nachfolgend als Acyl-Perborataktivatoren bezeichneten Verbindungen, zählen insbesondere Tetraacetylethylendiamin (TAED), aber auch solche Aktivatoren wie Tetraacetylmethylendiamin, Tetraacetylglycouril (TAGU), Diacetyldioxohexahydrotriazin (DADHT), Pentaacetylglucose (PAG), Acetoxibenzolsulfonat-Natrium, Nonanoyloxibenzolsulfonat-Natrium (NOBS), oder Benzoyloxibenzolsulfonat-Natrium (BOBS) können Verwendung finden. Der Einsatz von Perborat und Perborataktivator ist besonders von Vorteil, wenn der oxidative Abbau bei niedrigen bis mäßigen Temperaturen im Bereich von 25 bis 60°C durchgeführt wird. Üblicherweise erfolgt die Zugabe von Perborat und Perboraktivator als Feststoffe.

Das erfindungsgemäße Verfahren kann sowohl diskontinuierlich als auch kontinuierlich ausgeführt werden. Der entweder bereits vom Alkalisierungs- oder Veretherungsprozeß her oder durch separate Zubereitung in einem der zuvor genannten Suspensionsmittel zu einer Maische angefeuchtete bzw. suspendierte Polysaccharidether wird in einer geeigneten Vorrichtung, z.B. einem Mischer, Rührkessel oder Rührkolben, mit Perborat oder einer Mischung von Perborat und Perboraktivator, gegebenenfalls unter Zugabe von Base versetzt. Es kann aber auch aus einem bereits getrockneten oder gereinigten und getrockneten Polysaccharidether eine Maische oder eine Suspension hergestellt werden und in diese das Perborat bzw. das Perborat und der Perboraktivator, gegebenenfalls unter Zugabe von Base, eingemischt werden. Als Anmaischmittel bzw. Suspensionsmittel für die Polysaccharidether eignen sich die zuvor genannten Suspensionsmittel für feste Perborate. Dabei ist das Gewichtsverhältnis Anmaischmittel zu Polysaccharidether (Trockenbasis) 1:1 bis 5:1. Zur Herstellung der Suspension werden in der Regel Suspensionsmittelverhältnisse von 6:1 bis zu 25:1 gewählt.

Der Prozentsatz an Perborat, bezogen auf den trockenen Polysaccharidether (100 %ig), beträgt in der Regel nicht mehr als 20 Gew.-%. Der Wassergehalt der Maische bzw. der Suspension beträgt nicht mehr als 30 Gew.-%. Die Maische bzw. die Suspension aus Polysaccharidether und Perborat bzw. Perborat und Perboraktivator werden bei einer Temperatur zwischen 25 und 90°C, bevorzugt zwischen 50 und 80°C, gemischt, wobei die Depolymerisation erfolgt. Der so erzeugte niedermolekulare Polysaccharidether kann aus der Maische durch anschließendes Entfernen des Anmaischmittels, z.B. mittels Destillation, in mehr oder minder trockener und salzhaltiger Form gewonnen werden. Bei Arbeiten in Suspension wird nach Abtrennen des Suspensionsmittels, z.B. mittels Filtration, und Trocknen der Polysaccharidether in mehr oder minder salzhaltigem Zustand erhalten.

Alternativ kann je nach gewünschter Salzfreiheit der depolymerisierte Polysaccharidether anschließend, z. B. mit einem wäßrigen organischen Lösungsmittel, gewaschen und nachfolgend getrocknet werden.

Wie bereits vorstehend erwähnt, kann die Zugabe von Perborat bzw. Perborat und Perboraktivator in Form einer wäßrigen Lösung, einer Suspension oder als Feststoff erfolgen. Die Konzentration an Perborat in der eingesetzten wäßrigen Lösung beträgt bis zu 2,5 Gew.-%, bezogen auf das Perborat. Bei Einsatz einer Suspension beträgt das Gewichtsverhältnis Suspensionsmittel zu Perborat bzw. Perborat/Perboraktivator-Gemisch 2:1 bis 15:1. Die Molanzahl Perborat, bezogen auf den Perboraktivator ist in der Regel gleich der Molanzahl Peroxisäure, die sich aus einen Mol Perboraktivator bildet. So entstehen bei TAED durchschnittlich zwei Mol Peressigsäure aus einem Mol TAED, weshalb das Molverhältnis Perborat zu TAED mit 2:1 gewählt wird.

Die Depolymerisation von Polysaccharidethern verläuft im alkalischen Milieu, d.h. bei einem pH-Wert der Maische bzw. Suspension oberhalb 7, bevorzugt 7 bis 14, schneller als unter neutralen Verhältnissen. Dabei wird die Alkalität wahlweise charakterisiert durch das Molverhältnis von Base zum Polysaccharid, das als Ausgangsmaterial zur Herstellung des Polysaccharidethers dient, oder alternativ durch das Verhältnis zum Polysaccharidether selbst. Im allgemeinen wird das Verhältnis in Mol Base pro Grundmolmasse Polysaccharid bzw. Polysaccharidether ausgedrückt. Base ist bevorzugt Alkalihydroxid, z.B. Natriumhydroxid in Form von Ätznatron (99 bis 100 %ig) oder als konzentrierte ca. 50 %ige wäßrige Lösung. Es können aber auch andere Basen, z.B. Kalilauge zur Verwendung kommen. Bevorzugt werden Basengehalte von 0,05 bis 0,5 Mol Base pro Grundmolmasse Polysaccharidether während der Depolymerisation gewählt. Bei Depolymerisation des Polysaccharidethers direkt im Anschluß an den Polysaccharidveretherungsprozeß werden die oben angegebenen Basengehalte in der Regel von vornherein durch Wahl eines Basenüberschusses, bezogen auf das pro Polysaccharid eingesetzte Veretherungsmittel, eingestellt. Die Zugabe der Base kann aber auch in einem extra Schritt nach Beendigung des Veretherungsprozesses bzw. im Zuge einer separaten Anmaischung bzw. Herstellung einer Suspension erfolgen.

Eine bevorzugte Ausführungsform der Erfindung findet Anwendung bei der Depolymerisation von Polysaccharidethern durch Behandlung mit Perboraten bzw. Perborat/Perborataktivator-Gemischen in einem alkalischen Milieu, charakterisiert durch einen Basengehalt von 0,05 bis 0,5 Mol Base pro Grundmolmasse Polysaccharidether, bei Temperaturen zwischen 25 und 90°C, bevorzugt 50 bis 80°C, in den Fällen, wo der Polysaccharidether mit eins bis fünf Gewichtsteilen eines Suspensionsmittels angemaischt ist, und direkt im Anschluß an den Depolymerisationsvorgang und nach Neutralisation der restlichen Base mit einer geeigneten Säure, das Anmaischmittel, z.B. unter Anlegen von Vakuum, abdestilliert wird, und der depolymerisierte Polysaccharidether durch diese Maßnahme wasserfeucht oder trocken gewonnen wird. Dabei kann es sich bei der "Maische" im obigen Sinne sowohl um die nach dem Veretherungsprozeß vorliegende Reaktionsmaische als auch um eine separat, z.B. mit einem bereits getrockneten oder trockenen und weitgehend salzfrei gereinigten Polysaccharidether hergestellte Maische handeln.

Eine weitere Ausführungsform der Erfindung unterscheidet sich von der voranstehenden dadurch, daß der Polysaccharidether in einem wassermischbaren organischen Lösungsmittel suspendiert ist, wobei das Verhältnis Suspensionsmittel zu Polysaccharidether 6:1 bis 25:1 ist, und nach Neutralisation des restlichen Base der depolymerisierte Polysaccharidether abfiltriert und getrocknet wird.

Falls erforderlich, können aus dem Reaktionsgemisch nach Beendigung der erfindungsgemäßen Depolymerisation und nach Neutralisation der restlichen Base mit einer geeigneten Säure, z.B. Essig- oder Salzsäure oder Mischungen davon, anhaftende Salze durch Extraktion mittels wassermischbarer organischer Lösungsmittel entfernt werden. Diese Extraktion erfolgt ohne Verklumpen oder Verkleistern, da die Wasserbeladung des depolymerisierten Polysaccharidethers infolge der erfindungsgemäßen Behandlung gering ist.

Mit dem erfindungsgemäßen Verfahren können Polysaccharidether grundsätzlich beliebig depolymerisiert werden. Bevorzugt werden die höhermolekularen Polysaccharidether auf eine mittlere Molmasse $M_\eta$ bis 5000 abgebaut. Das entspricht einer Viskosität von 2 mPa·s (gemessen mit einem Höppler-Kugelfallviskosimeter in einer 1,9 gew.-%igen wäßrigen Lösung bei 20°C). Die so erhaltenen Polysaccharidether zeigen keine oder nur geringe Verfärbung. Weitere Vorteile des erfindungsgemäßen Verfahrens liegen in der guten Reproduzierbarkeit bei der Einstellung von niederen Molmassen sowie in der angestrebten geringen Entwicklung von Sauerstoff während des oxidativen Abbaus, so daß die Bildung eines explosiven Gasgemisches während des oxidativen Abbaus nicht erfolgt.

Weiterhin wird das erfindungsgemäße Verfahren anhand der folgenden Beispiele erläutert:

Soweit nicht anders angegeben, wird die Viskosität an einer bezogen auf Trokkenmasse 1,9 gew.-%igen wäßrigen Lösung bei 20°C mit einem Höppler-Kugelfallviskosimeter gemessen. Soweit nicht anders angegeben, werden die mittleren Molmassen nach der Viskositätsmethode mit dem Ubbelohdeviskosimeter und unter Anwendung der Staudinger-Beziehung ermittelt.

**Beispiel 1**

**1.1 Herstellung des Celluloseethers (CMC)**

In einem 20-Liter-Reaktionsmischer (Typ: Pflugscharschaufelmischer) werden 8000 g Isopropanol (85 %ig) und 1100 g 49 gew.-%ige Natronlauge eingefüllt, auf 13 °C abgekühlt und mit 1400 g Natriummonochloracetat (Reinheit 98 %) versetzt. Nun werden 2000 g Lufttrockner Laubholzzellstoff (Restfeuchte 5 Gew.-%, Polymerisationsgrad DP = 700) in fein gemahlener Form eingetragen und der vorhandene Sauerstoff unter Mischen und Anlegen von Vakuum entfernt. Anschließend wird in den Reaktionsmischer Stickstoff bis zu einem Überdruck von 0,1 bar eingegeben und 30 Minuten bei 25 °C gemischt (alkalisiert). Zur Veretherung des Gemischs wird dann über einen Zeitraum von 60 Minuten auf 70 °C aufgeheizt und nachfolgend diese Temperatur über einen Zeitraum von 60 Minuten gehalten. Nach Entlüften des Reaktionsmischers wird anhand einer Probe die Viskosität des Celluloseethers bestimmt, die 1000 mPa•s beträgt, was einer mittleren Molmasse von 150000 g/mol entspricht.

**1.2 Oxidativer Abbau des Celluloseethers**

Zu dem erhaltenen Reaktionsgemisch werden bei einer Temperatur von 70 °C 990 g einer Suspension von 165 g Natriumperborat-Tetrahydrat (das entspricht 6,0 % Natriumperborat-Tetrahydrat, bezogen auf die entstandene Carboximethylcellulose) in 825 g destilliertem Wasser innerhalb von 2 Minuten zugegeben und dann 30 Minuten lang bei 70 °C gemischt. Die Maische hat einen Gesamtwassergehalt von 21 %. Eine Gasprobe, die 10 Minuten nach Zugabe der Perborat-Tetrahydratsuspension aus dem Dampfraum des Mischers gezogen wird, besitzt folgende Zusammensetzung: 7,5 Vol.-% Sauerstoff, 30,0 Vol.-% Stickstoff, 42,0 Vol.-% Isopropanol, 20,5 Vol.-% Wasser. Diese Zusammensetzung belegt, daß während des oxidativen Abbaus aus dem eingesetzten Perborattetrahydrat kein Sauerstoff abgegeben wird, denn die Sauerstoff- und Stickstoffkonzentrationen stehen im gleichen Verhältnis zueinander wie in Luft. Die Dampfzusammensetzung liegt außerhalb des Bereichs explosibler Gemische.

Nach Ablauf von 30 Minuten wird die Reaktionsmischung abgekühlt, der Alkaliüberschuß von ca. 0,1 Mol/Mol Cellulose mit Essigsäure neutralisiert, der Celluloseether mit 60 %igem Isopropanol salzfrei gewaschen und bei 60 °C getrocknet.

Der erhaltene Celluloseether besitzt einen durchschnittlichen Substitutionsgrad (DS) von 0,88 (bestimmt nach der sogenannten Alkoholwaschmethode und Veraschung mit Hilfe von Schwefelsäure; vergleiche L. Grosse und W. Klaus, Z. Anal. Chem. 259, 159 bis 203 (1972)). Die Viskosität beträgt 15 mPas. Diese Viskosität entspricht einer Molmasse von im Mittel 40000 g/mol.

## Beispiel 2

### 2.1 Herstellung des Celluloseethers (CMC)

In einem Reaktionsmischer mit 240 Litern Nutzraum werden 87,5 Liter Isopropanol (85 %ig) und 17,5 kg lufttrockener Laubholzzellstoff (DP ca. 1300, Restfeuchte: 5 Gew.-%) in fein gemahlener Form eingefüllt. Nach Zugabe von 6,7 Litern 49,5 gew.-%iger wäßriger Natronlauge wird eine halbe Stunde lang bei einer Temperatur zwischen 25 und 30 °C alkalisiert. Nun werden 13,5 kg Natriummonochloracetat zugefügt. Anschließend wird durch Anlegen von Vakuum der Luftsauerstoff aus der Reaktionsmaische entfernt, Stickstoff bis zu einem Überdruck von 0,11 bar eingegeben und zur Veretherung das Gemisch innerhalb von 45 Minuten auf eine Temperatur von 70 °C aufgeheizt. Während des Aufheizens wird mittels eines Manostats der sich im Dampfraum bildende Überdruck über einen Abgaswäscher entspannt und bei 70 °C ein Druck von 1,11 bar eingestellt. Die Reaktionsmaische wird nach Erreichen von 70 °C bei einer Temperatur zwischen 68 und 78 °C eine Stunde lang gerührt. Nach dieser Veretherungszeit wird die Reaktionsmaische auf 68 °C abgekühlt. Am Produktausgang wird eine Probe der entstandenes Carboximethylcellulose entnommen und am Dampfdom eine Gasprobe gezogen. Die hergestellte Carboximethylcellulose besitzt eine Viskosität von 850 mPas, was einer mittleren Molmasse von 149000 g/mol entspricht. Die Zusammensetzung der Gasprobe ist wie folgt: 5 Vol.-% Sauerstoff, 73 Vol.-% Stickstoff, 15 Vol.-% Isopropanol und 7 Vol.-% Wasser.

### 2.2 Oxidativer Abbau des Celluloseethers

Unmittelbar nach Entnahme der Probe werden 250 g Natriumperborat-Tetrahydrat (das entspricht 1 % Natriumperborat-Tetrahydrat, bezogen auf die entstandene Carboximethylcellulose) in fester Form durch einen Kugelhahn in die Reaktionsmaische geschüttet, und nach ca. 4 Minuten wird am Dampfdom eine weitere Gasprobe gezogen. Während der Zugabe wird die Reaktionsmaische gerührt und erwärmt, wobei schließlich eine Temperatur von 80 °C erreicht wird. 20 Minuten nach Zugabe der ersten Portion werden erneut 250 g Natriumperborat-Tetrahydrat in fester Form in den Mischer geschüttet und wieder ca. 4 Minuten später wird eine Gasprobe entnommen. Dieser Vorgang wird noch zwei weitere Mal wiederholt, so daß insgesamt 1000 g Natriumperborat-Tetrahydrat (das entspricht 4,0 % Natriumperborat-Tetrahydrat, bezogen auf die entstandende CMC) eingesetzt und 5 Proben aus der Dampfraumatmosphäre entnommen werden. Der Gesamtwassergehalt der Maische ist zum Ende 17 %. Nach Zugabe der letzten Portion Natriumperborat-Tetrahydrat wird noch 20 Minuten bei 80 °C gerührt, anschließend der geringe Alkaliüberschuß mit Essigsäure neutralisiert, die depolymerisierte Carboxymethylcellulose dem Mischer entnommen und analog Beispiel 1 aufgearbeitet. Der hergestellte Carboximethylcelluloseether besitzt einen durchschnittlichen Substitutionsgrad (DS) vcn 0,84, die Viskosität beträgt 19 mPas und entspricht einer mittleren Molmasse von 52000 g/mol. Tabelle 2 zeigt die Zusammensetzung der im Verlauf der Depolymerisation entnommenen Dampfraumproben.

## Beispiele 3 bis 6

Auf die gleiche Weise wie in Beispiel 1 beschrieben und mit den gleichen Einsatzmengen werden in einem jeweils neuen Ansatz vier Carboximethylcelluloseetherprodukte hergestellt, die im Anschluß an die Veretherung bei 70 °C und - gerechnet ab Ende der Perborat-Tetrahydratzugabe - im Verlauf von 30 Minuten depolymerisiert werden, wobei im Unterschied zu Beispiel 1 das Natriumperborat-Tetrahydrat als festes Pulver suspendiert in 85 %igem Isopropanol, innerhalb von wenigen Minuten zugegeben wird, und zwar von Beispiel 3 bis 6 in steigenden Mengen. Der Wassergehalt der Gesamtmaische beträgt maximal 17 %. Tabelle 3 enthält eine Aufstellung mit den eingesetzten Perborat-Tetrahydratmengen, bezogen auf lufttrockenen Zellstoff, den Zusammensetzungen der Perboratsuspensionen und die nach den zitierten Methoden analysierten Kennziffern dieser depolymerisierten Carboximethylcelluloseether.

### Beispiel 7

In einem mit einem Rührer und Rückflußkühler versehenen 2-Liter-Dreihalskolben werden 1250 g Isopropanol (80 %ig) eingefüllt und 125 g einer Carboximethylcellulose mit einem DS von 0,80, einer Reinheit von 94 % und einer Viskosität von 9180 mPa·s, was einer Molmasse von im Mittel 200000 g/mol entspricht, eingerührt. Mittels eines Heizbades wird die Suspension auf 60 °C aufgeheizt, 9 g einer 49,5 gew.-%igen Natronlauge zugefügt und 10 Minuten gerührt. Anschließend werden 15 g Natriumperborat-Tetrahydrat (entsprechend 12,75 % Natriumperborat-Tetrahydrat, bezogen auf trockene CMC) in fester Form in die Suspension gegeben und insgesamt 90 Minuten lang bei 60 °C gerührt. Dabei beträgt der Wassergehalt der Gesamtmaische 19,5 %. Vom Endprodukt sowie von zwei nach 30 bzw. 60 Minuten entnommenen Proben werden je ca. 7 g (trocken gerechnet) in 250 ml Isopropanol (80 %ig) aufgerührt, mit Essigsäure neutralisiert, abfiltriert, bei 60 °C getrocknet und die Viskosität ermittelt.

### Beispiel 8

Analog Beispiel 7, jedoch mit dem Unterschied, daß die Reaktionsmaische auf 80 °C erhitzt wird.

Die Tabelle 4 zeigt die in den Beispielen 7 und 8 erhaltenen Viskositäten der Carboximethylcelluloseether und die mittleren Molmassen in Abhängigkeit von der beim Depolymerisieren vorliegenden Temperatur und der Abbauzeit. Überraschenderweise lassen sich die Proben und die Endprodukte trotz ihrer sehr niedrigen Lösungsviskositäten gut abfiltrieren. Nach dem Trocknen lassen sich die Proben durch kurzzeitiges Behandeln in einer Labor-Schlagkreuzmühle wieder in die ursprüngliche Granulatstruktur des Ausgangsproduktes bringen.

### Beispiel 9

Analog Beispiel 7 wird ein Ansatz bei einer Temperatur von 60 °C durchgeführt, wobei die doppelte Menge Natronlauge eingesetzt wird, so daß der Gesamtwassergehalt der Maische rund 20 % ist. Tabelle 5 zeigt die Abhängigkeit der Depolymerisation vom Alkaligehalt. Insbesondere bei der Aufarbeitung des Ansatzes B zeigt sich, daß das erfindungsgemäße Verfahren trotz der extrem niedrigen Lösungsviskositäten der depolymerisierten Carboximethylcellulose eine problemlose Trocknung und anschließende Konfektionierung ermöglicht. Alle Proben des Ansatzes B besitzen nach einer kurzen Behandlung in der Labor-Schlagkreuzmühle wieder die Granulatstruktur des eingesetzten Celluloseethers (®Tylose C 6000 der Hoechst AG).

Die Beispiele 10 und 11 zeigen die Vorteile des erfindungsgemäßen Verfahrens bei der Trocknung von niederpolymeren Celluloseethern, bei dem ein Verklumpen oder Verkleistern nicht auftritt:

### Beispiel 10

#### 10.1 Herstellung des Celluloseethers (CMC)

In einem Pflugscharschaufelmischer mit einem Nutzinhalt von 4,5 Liter werden 750 g Isopropanol (85 %ig) und 160 g feste Natriumhydroxid (Reinheit 99 %) eingefüllt, auf 20 °C temperiert und 250 g fein gemahlener Laubholzzellstoff (Polymerisationsgrad 1480, Restfeuchte 5 Gew.-%) eingemischt. Anschließend wird 30 Minuten lang bei einer Temperatur zwischen 20 und 25 °C alkalisiert und dann eine Lösung von 225 g 80 gew.-%iger Monochloressigsäure in 225 g Isopropanol (85 %ig) unter Kühlen so zugetropft, daß die Temperatur der Reaktionsmaische 25 °C nicht überschreitet. Nach Beendigung der Monochloressigsäurezugabe wird der Mischer geschlossen, die Luft durch Anlegen von Vakuum entfernt und Stickstoff bis zu einem Überdruck von 0,3 bar eingeleitet. Innerhalb von 30 Minuten wird auf 75°C aufgeheizt und 60 Minuten bei 75 °C erwärmt. Eine Probe des hergestellten Carboximethylcelluloseethers besitzt eine Viskosität von 6300 mPas, was einer mittleren Molmasse von rund 190000 g/mol entspricht.

#### 10.2 Oxidativer Abbau des Celluloseethers

Zu dem erhaltenen Reaktionsansatz werden 57 g Natriumperborat-Tetrahydrat (entsprechend 17 % bezogen auf entstandene CMC) in Form des kristallinen Pulvers innerhalb von 30 Minuten bei 75 °C eingestreut. Der Gesamtwassergehalt ist 17,5 %. Nach 15 Minuten Reaktion bei 75 °C wird eine Probe entnommen, der Mischer verschlossen und unter Anlegen von Vakuum die vorhandene Flüssigkeit (Isopropanol und Wasser) entfernt. Anschließend wird der Mischer gekühlt und geöffnet. Das Produkt liegt als helles Gemenge aus wattigen und körnigen Anteilen vor. Die Körner besitzen die Form von linsen- bis haselnußgroßen Kugeln. An der Mischerwelle gibt es eine lockere Krustenbildung, die Pflugscharschaufeln sind frei von Materialbelag, der gesamte Inhalt des Mischers kann ohne Schwierigkeiten entnommen und auf einer Labormühle zu einem Feingranulat gemahlen werden. Weitere Kenndaten und Analysendaten sind in der Tabelle 6 aufgeführt.

**Vergleich zu Beispiel 10**

Mit dem gleichen Chemikalien-und Mengeneinsatz gemäß Beispiel 10 wird die Depolymerisation des Carboximethylcelluloseethers durchgeführt, mit dem Unterschied, daß gemäß dem Stand der Technik wäßrige Wasserstoffperoxidlösung zur Depolymerisation verwendet wird. Dabei wird nach Beendigung der Veretherungsreaktion und Entnahme der Probe "vor Abbau" eine Lösung von 36 g Wasserstoffperoxid (35 %ig) in 48 g destilliertem Wasser innerhalb von 30 Minuten bei 75 °C zugetropft, wodurch sich ein Wassergehalt von 20 % einstellt. Die Mischung wird 15 Minuten bei 75 °C gerührt. Nach Entnahme der Probe "nach Abbau" wird wie beim ersten Ansatz die aus Isopropanol und Wasser bestehende Feuchte entfernt, die Reaktionsmaische abgekühlt und der Mischer geöffnet. Es zeigt sich, daß das gesamte Produkt als honigfarbene, glasige und gummiartige Klumpen an der Mischerwelle und den Pflugscharschaufeln klebt. Zur Analyse wird eine Probe "nach Ausdämpfen" entnommen. Der hergestellte Celluloseether ist nicht verwertbar, der Ansatz wird verworfen. Tabelle 6 zeigt die erhaltenen Produktkenndaten.

Die depolymerisierende Wirkung von Natriumperborat-Tetrahydrat kann mit Hilfe von Aktivatoren z.B. TAED gesteuert werden, so daß auch bei niedrigen Temperaturen in akzeptablen Reaktionszeiten niedermolekulare Celluloseether hergestellt werden können (siehe Beispiel 11):

**Beispiel 11**

Durchführung entsprechend Beispiel 1 jedoch unter Verwendung eines fein gemahlenen Laubholzzellstoffs mit einem Polymerisationsgrad DP von 660. Zur Depolymerisation wird im Anschluß an die Veretherung eine frisch hergestellte Suspension aus den kristallinen Pulvern von Natriumperborat-Tetrahydrat (165 g) und dem Aktivator TAED (125 g), in 825 g destilliertem Wasser in die Reaktionsmaische gegeben, wobei sich der Wassergehalt zu 17 % ergibt. In dem Reaktionsansatz (A) findet die Depolymerisation bei 50 °C über einen Zeitraum von 30 Minuten statt und in einem zweiten Reaktionsansatz (B) bei 70 °C.

**Vergleichsbeispiel zu Beispiel 11**

Entsprechend der in Beispiel 11 beschriebenen Arbeitsweise erfolgt in den Reaktionsansätzen (C) und (D) die Depolymerisation der Carboxymethylcellulose mittels einer Aufschlämmung von TAED in einer 12,5 gew.-%igen wäßrigen Wasserstoffperoxidlösung. Die Aufschlämmung entspricht im Peroxid- und TAED-Gehalt denen des Beispiels 11. Nach erfolgter Veretherung wird die Aufschlämmung dem Reaktionsansatz zügig zugegeben. Es stellt sich ein Gesamtwassergehalt von 18 % ein. Im Reaktionsansatz (C) beträgt die Temperatur 50 °C, im Reaktionsansatz (D) beträgt die Temperatur 70 °C.

Die Tabelle 7 enthält die bei den Reaktionsansätzen ermittelten Kenndaten. Die Kenndaten zeigen, daß die erfindungsgemäße Kombination aus Perborat und Aktivator zu einer raschen und effektiven Depolymerisation insbesondere bei niedrigeren Temperaturen führt.

**Beispiel 12**

**12.1 Herstellung des Celluloseethers (CMHEC)**

In einen 20-Liter-Reaktionsmischer (Typ: Pflugscharschaufelmischer) werden 3000 g Isopropanol (85 %ig) und 705 g 49,5 gew.-%ige Natronlauge eingefüllt und auf 16 °C abgekühlt. Nun werden 680 g Natriummonochloracetat und sofort anschließend 1000 g lufttrockener Fichtenzellstoff (Restfeuchte 5 Gew.-%, Polymerisationsgrad DP = 600) unter Kühlen zugemischt und der vorhandene Sauerstoff unter Mischen und Anlegen von Vakuum entfernt. Die Alkalisierung des Zellstoffs erfolgt bei einer Temperatur unter 20 °C über 30 Minuten. Als nächstes werden 385 g Ethylenoxid (EO) zugegeben. Die Veretherung erfolgt über 60 Minuten bei 40 °C, dann über 30 Minuten über 50 °C und schließlich über 90 Minuten bei 70 °C. Nach Entlüften wird anhand einer Probe die Viskosität der hergestellten CMHEC bestimmt.

**12.2 Oxidativer Abbau des Celluloseethers**

Nachfolgend werden bei 70 °C rasch 30 g festes Natriumperborat-Tetrahydrat (entsprechend 1,9 % Natriumperborat-Tetrahydrat, bezogen auf entstandene CMHEC) in die Reaktionsmischung eingestreut. Nach 15 Minuten wird eine zweite Produktprobe zur Viskositätsermittlung entnommen und dann erneut 30 g festes Natriumperborat-Tetrahydrat zugegeben. Nach 15 Minuten wird eine dritte Produktprobe entnommen und dann erneut 30 g festes Natriumperborat-Tetrahydrat zugegeben (insgesamt also 5,7 % bezogen auf CMHEC, wobei zum Schluß der Wassergehalt der Gesamtmaische 18 % beträgt). Nach 15 Minuten wird eine vierte Probe zur Viskositätsermittlung entnommen. Dazu werden die Proben nach Neutralisation des Restalkali mit wäßrigem Isopropanol salzfrei gewaschen. Die hergestellte Carboximethylhydroxiethylcellulose besitzt einen durchschnittlichen Substitutionsgrad DS von 0,84 und einen molaren Substitutionsgrad MS von 0,91. Die gemessenen Viskositäten sind der Tabelle 8 zu entnehmen.

**Beispiel 13**

Entsprechend Beispiel 12 wird eine weitere Carboximethylhydroxiethylcellulose hergestellt. Im Unterschied zu Beispiel 12 werden insgesamt 60 g Natriumperborat-Monohydrat in 3 Portionen zu 20 g verwendet (insgesamt also 3,8 % Natriumperborat-Monohydrat, bezogen auf CMHEC, wobei der Wassergehalt der Maische am Ende 18 % beträgt). Der depolymerisierte Carboximethylhydroxiethylcelluloseether besitzt einen durchschnittlichen Substitutionsgrad DS von 0,85 und einen molaren Substitutionsgrad MS von 0,89. Die Tabelle 9 enthält die Kenndaten dieses Abbauversuchs.

**Beispiel 14**

**14.1 Herstellung des Celluloseethers (HEC)**

In einem 20-Liter-Reaktionsmischer (Typ: Pflugscharschaufelmischer) werden 7670 g Isopropanol (85 %ig), 610 g 49 gew.-%ige Natronlauge und 1000 g Fichtenholzzellstoff (Restfeuchte: 5 Gew.-%, Polymerisationsgrad DP = 810) in fein gepulverter Form bei 25 °C gemischt und der vorhandene Sauerstoff unter Mischen und Anlegen von Vakuum entfernt. Die Alkalisierung erfolgt über einen Zeitraum von 30 Minuten. Dann werden 1160 g Ethylenoxid zudosiert und der Reaktionsansatz 80 Minuten lang bei einer Temperatur zwischen 25 und 30 °C gehalten. Nachfolgend wird innerhalb 40 Minuten die Temperatur auf 60 °C gesteigert und weitere 60 Minuten bei 65 bis 70 °C gehalten. Anschließend wird der Mischer abgekühlt, belüftet und von dem hergestellten Hydroxiethylcelluloseether eine Probe (Probe 1) entnommen, die sofort mit einer Mischung aus Salz- und Essigsäure (molares Verhältnis 4:1) neutralisiert wird.

**14.2 Oxidativer Abbau des Celluloseethers**

Vom alkalischen Reaktionsansatz wird ein Drittel in einen 4,5 Liter Pflugscharschaufelmischer überführt und auf 70 °C erwärmt. Dann werden 15 g festes Natriumperborat-Tetrahydrat (entsprechend 2,9 % Natriumperborat-Tetrahydrat, bezogen auf eingesetzte HEC) in kristalliner Form rasch eingestreut und nach 15 Minuten nochmals 15 g festes Natriumperborat-Tetrahydrat zugegeben, wobei die Temperatur auf 70 °C gehalten wird (insgesamt wurden also 5,8 % Natriumperborat-Tetrahydrat, bezogen auf HEC, eingesetzt). Nach insgesamt 30 Minuten wird der Ansatz mit dem obengenannten Säuregemisch neutralisiert und entnommen. Ein kleiner Teil der depolymerisierten Hydroxiethylcellulose wird mit Hilfe von 85 %igem Isopropanol und 80 bis 90 %igem Aceton soweit extrahiert, daß der Natriumchloridgehalt unter einem 1 % liegt. Nach dem Trocknen des Celluloseethers wird die Viskosität bestimmt (Probe 2).

Das zweite Drittel des Reaktionsansatzes wird in dem 4,5 Liter Pflugscharschaufelmischer auf die gleiche Weise aber mit einer festen Mischung aus Natriumperborat-Tetrahydrat und TAED depolymerisiert (Probe 3).

Das letzte Drittel wird unter Verwendung von Natriumperborat-Monohydrat depolymerisiert, jedoch mit zwei Portionen zu nur 10 g, entsprechend 2x1,95 % Natriumperborat-Monohydrat, bezogen auf HEC (Probe 4). Der Gesamtwassergehalt der Abbaumaische beträgt schließlich 14,5 %.

In der Tabelle 10 sind die Kenndaten der hergestellten Hydroxiethylcellulose (MS = 2,30) und der depolymerisierten Celluloseether aufgeführt.

Die Beispiele 15 und 16 belegen, daß auch Natriumperborat-Monohydrat allein und in Kombination mit einem Aktivator eine effektive Depolymerisationswirkung zeigt:

**Beispiel 15**

Die Durchführung erfolgt entsprechend Beispiel 11. Am Ende der Veretherungsphase wird eine Probe entnommen, die sofort mit Essigsäure neutralisiert wird. Dann werden 110 g festes Natriumperborat-Monohydrat (entsprechend 4,2 % Natriumperborat-Monohydrat, bezogen auf entstandene CMC) rasch in die 70 °C heiße Reaktionsmaische gestreut und 30 Minuten lang bei 70°C gerührt. Der Wassergehalt der Maische beträgt dabei 16,5 %. Der depolymerisierte Celluloseether wird mit Essigsäure neutralisiert, abgekühlt, mit wäßrigem Isopropanol salzfrei extrahiert und seine Viskosität bestimmt. Die Tabelle 11 enthält die ermittelten Kenndaten.

**Beispiel 16**

### 16.1 Herstellung des Celluloseethers (CMC)

Im 240-Liter-Reaktionsmischer werden 72 kg Isopropanol (85 %ig), 9,4 kg 49,5 gew.-%ige Natronlauge und 12 kg Natriummonochloracetat bei ca. 15 °C kurze Zeit vermischt und dann 17,5 kg fein gemahlener Laubholzzellstoff (Restfeuchte: 5 %, Polymerisationsgrad DP 700) eingearbeitet. Der Reaktor wird verschlossen, mittels Vakuum der vorhandene Sauerstoff unter Mischen entfernt und Stickstoff bis zu einem Überdruck von 0,1 bar zugegeben. Die Alkalisierung des Zellstoffs erfolgt über 30 Minuten bei einer Temperatur zwischen 25 und 30 °C. Danach wird innerhalb von 60 Minuten auf 70 °C aufgeheizt und bei dieser Temperatur 60 Minuten lang verethert. Anschließend wird der Reaktionsmischer entlüftet und eine Probe entnommen ("vor Abbau"), die sofort mit Essigsäure neutralisiert wird.

### 16.2 Oxidativer Abbau des Celluloseethers

Im Anschluß daran wird eine Mischung aus 480 g festem Natriumperborat-Monohydrat (entsprechend 2,0 % Natriumperborat-Monohydrat, bezogen auf entstandene CMC) und 545 g TAED in die alkalische Reaktionsmaische gestreut und 60 Minuten lang bei einer Temperatur von 70 °C gerührt. Dabei ist der Wassergehalt der Maische 16 %. Dann wird das überschüssige Alkali mit Essigsäure neutralisiert, die Reaktionsmaische abgekühlt, der depolymerisierte Celluloseether dem Mischer entnommen und nach Extraktion der Salze mit wäßrigem Isopropanol und Trocknen die Viskosität dieser Probe "nach Abbau" bestimmt. Der hergestellte Celluloseether besitzt einen durchschnittlichen Substitutionsgrad DS von 0,82, und "vor Abbau" eine Lösungsviskosität von 650 mPa·s, was einer mittleren Molmasse von 137000 g/mol entspricht. Die depolymerisierte Carboximethylcellulose "nach Abbau" besitzt eine Lösungsvikosität von 15 mPas. Da bedeutet eine mittlere Molmasse von 45000 g/mol.

**Beispiel 17**

In einem mit Rührer und Rückflußkühler versehenen 2-Liter-Dreihalskolben werden 1275 g Isopropanol (70 %ig) vorgelegt und 1,25 g Natriumhydroxid darin aufgelöst. Die Lösung wird auf 65 °C erwärmt und 85 g salzfreier, trockener Sulfoethylcelluloseether (Restfeuchte 10,4 %; Veretherungsgrad DS = 0,62; Viskosität = 10550 mPas; mittlere Molmasse 220000 g/mol) darin suspendiert. Nun wird die Suspension 15 Minuten lang gerührt, und dann 7,70 g Natriumperborat-Tetrahydrat (entsprechend 10 % Natriumperborat-Tetrahydrat, bezogen auf SEC) in Pulverform in die Suspension gegeben. Der Wassergehalt der Suspension beträgt dabei 29 %. Bei 65 °C wird daraufhin 60 Minuten lang depolymerisiert, die überschüssige Lauge mit Essigsäure neutralisiert, der depolymerisierte Sulfoethylcelluloseether abfiltriert und ohne weitere Aufarbeitung und Reinigung bei 60 °C getrocknet. Die Lösungsviskosität des Produkts beträgt 4 mPas (entspricht einer mittleren Molmasse von 14000 g/mol).

**Beispiel 18**

In einen mit einem Rührer und Rückflußkühler versehenen 500 ml-Dreihalskolben werden 250 g 90 %iges wäßriges Dimethylglykol (DMG, 1,2-Dimethoxiethan) eingefüllt und 25 g einer Carboximethylcellulose (DS = 0,80; Reinheit = 94 %; Viskosität 9180 mPas (das entspricht einer mittleren Molmasse von 200000 g/mol)) eingerührt. Mittels eines Heizbades wird die Suspension auf 60 °C erwärmt, 3,6 g Natronlauge (49,5 %ig) zugetropft, 10 Minuten gerührt und dann 3,0 g Natriumperborat-Tetrahydrat (entsprechend 12,8 % Natriumperborat-Tetrahydrat, bezogen auf die reine CMC), suspendiert in 10 g 90 %igem DMG in den Kolben gespült. Die gesamte Suspension besitzt einen Wassergehalt von 10 %. Anschließend wird 60 Minuten lang bei 60 °C gerührt. Nach dieser Zeit wird die überschüssige Natronlauge mit 50 %iger Essigsäure neutralisiert, die abgebaute CMC abfiltriert und bei 60 °C getrocknet. Das Produkt besitzt eine Viskosität von 14 mPa·s. Das entspricht einer mittleren Molmasse von 44000 g/mol.

**Beispiel 19**

Versuchsanordnung entsprechend Beispiel 18, jedoch werden 125 g 93 %iges Ethanol vorgelegt. Nach Einrühren von 25 g CMC des Beispiels 18, Aufheizen auf 60 °C, Zutropfen von 3,6 g 49,5 %iger Natronlauge und 10 Minuten Homogenisieren, werden 3,0 g Natriumperborat-Tetrahydrat, suspendiert in 10 g Ethanol (93 %ig), in den Kolben gegeben. Der Wassergehalt der Suspension ist 7,4 %. Nachdem 60 Minuten bei 60 °C gerührt worden ist, wird mit 50 %iger Essigsäure neutralisiert, abfiltriert und bei 60 °C getrocknet. Das Produkt besitzt eine Viskosität von 70 mPas, was einer mittleren Molmasse von 82500 g/mol entspricht.

**Beispiel 20**

Versuchanordnung entsprechend Beispiel 18

In den Kolben werden 250 g 85 %iges Isopropanol gefüllt und 25 g Methylhydroxiethylcellulose (MHEC; Feuchte 9 %, DS-(OCH$_3$) = 1,51; MS-(OC$_2$H$_4$) = 0,17; Viskosität = 68000 mPa·s, entsprechend einer mittleren Molmasse von 227000 g/mol) eingerührt. Unter ständigem Rühren wird auf 60 °C aufgeheizt, 3,6 g Natronlauge (49,5 %ig) zugetropft, 10 Minuten homogenisiert, dann eine Suspension von 1,5 g Natriumperborat-Tetrahydrat (6,6 % bezogen auf trockene MHEC) in 10 g destilliertem Wasser zugegeben und 60 Minuten bei 60 °C gerührt. Das Gesamtgemisch hat dabei einen Wassergehalt von 17,2 %. Nach dieser Prozedur wird mit 50 %iger Essigsäure neutralisiert, der Feststoff abfiltriert, ein Mal mit 250 g 100 %igem Isopropanol gewaschen und dann bei 60 °C getrocknet. Die abgebaute MHEC besitzt eine Viskosität von 125 mPas, was einer mittleren Molmasse von 81000 g/mol entspricht.

**Beispiel 21**

Versuchsanordnung entsprechend Beispiel 18

In den Kolben werden 250 g 90 %iges Isopropanol gefüllt und 25 g Methylhydroxiethylcarboximethylcellulose (MHECMC; Feuchte 2 %; DS-(OCH$_3$) = 1,63; MS-(OC$_2$H$_4$) = 0,12; DS-(Carboximethyl) = 0,05; Viskosität über 150000 mPa·s, was einer mittleren Molmasse von rund 250000 g/mol entspricht) eingerührt. Unter ständigem Rühren wird auf 60 °C aufgeheizt, 3,6 g Natronlauge (49,5 %ig) eingetropft, 10 Minuten homogenisiert, 1,5 g Natriumperborat-Tetrahydrat (6,1 % Natriumperborat-Tetrahydrat, bezogen auf trockene MHECMC), suspendiert in 10 g destilliertem Wasser, zugegeben und 60 Minuten bei 60 °C gerührt. Der Wassergehalt der Gesamtsuspension beträgt 12,5 %. Dann wird mit 50 %iger Essigsäure neutralisiert, der abgebaute Celluloseether abfiltriert, ein Mal mit 250 g 100 %igem Isopropanol gewaschen und bei 60 °C getrocknet. Der depolymerisierte Celluloseether besitzt eine Viskosität von 400 mPa·s, was einer mittleren Molmasse von 100000 g/mol entspricht.

**Beispiel 22**

Versuchsanordnung entsprechend Beispiel 18

In den Rührkolben werden 175 g Isopropanol (85 %ig) vorgelegt und 25 g Hydroxipropylstärke (HPS; Feuchte 7,2 %; Hydroxipropyl-MS = 0,32; Viskosität = 14 mPa·s, was einer mittleren Molmasse von 35000 g/mol entspricht), eingerührt. Es wird unter ständigem Rühren auf 60 °C aufgeheizt, 3,6 g Natronlauge (49,5 %ig) zugetropft, 10 Minuten homogenisiert, 3,0 g Natriumperborat-Tetrahydrat (12,9 % Natriumperborat-Tetrahydrat, bezogen auf trockene HPS) - suspendiert in 10 g 85 %igem Isopropanol - zugegeben und 60 Minuten bei 60 °C gerührt. Der Wassergehalt der Gesamtsuspension beträgt dabei 15 %. Nach dieser Behandlung wird die Suspension mit 50 %iger Essigsäure neutralisiert, die abgebaute HPS abfiltriert, ein Mal mit 100 %igem Isopropanol gewaschen und bei 60°C getrocknet. Die abgebaute HPS hat eine Viskosität von 4 mPas, entsprechend einer mittleren Molmasse von 10000 g/mol.

**Beispiel 23**

Im Rührkolben derselben Versuchsanordnung wie in Beispiel 18 werden 175 g 90 %iges Aceton vorgelegt und 25 g eines Carboximethylhydroxipropyl-Guar-Gums (CMHP-Guar-Gum; Feuchte 9,0 %; Carboximethyl-DS = 0,13; Hydroxipropyl-MS = 0,40; Viskosität über 150000 mPas, entsprechend einer mittleren Molmasse von rund 250000 g/mol) eingerührt. Unter ständigem Rühren wird auf 55 °C aufgewärmt, dann werden 3,6 g Natronlauge (49,5 %ig) zugetropft, 10 Minuten homogenisiert, 3,0 g Natriumperborat-Tetrahydrat (bezogen auf trockenen CMHP-Guar-Gum 13,3 % Natriumperborat-Tetrahydrat), suspendiert in 10 g 90 %igem Aceton, zugegeben und 60 Minuten bei 55 °C gerührt. Der Wassergehalt der gesamten Suspension beträgt dabei 9,8 %. Nach dieser Prozedur wird mit 50 %iger Essigsäure neutralisiert, der abgebaute CMHP-Guar-Gum abfiltriert, ein Mal mit 250 g 90 %igem Aceton gewaschen und bei 60 °C getrocknet. Der abgebaute CMHP-Guar-Gum besitzt eine Viskosität von 19 mPas, was einer mittleren Molmasse von 44000 g/mol entspricht.

Tabelle 1: Stand der Technik. Zusammensetzung der Dampfraumatmosphäre beim $H_2O_2$-Abbau von Carboximethyl-cellulose (CMC)

| lfd. Nr. | Verethe-rungs-grad DS | $H_2O_2$-Einsatz pro CMC | Abbau-Temperatur | Viskosität | | Druck im Dampfraum absolut | Zusammensetzung der Dampfraum-atmo-sphäre[1] | | | explosions-fähig: ja / nein |
|---|---|---|---|---|---|---|---|---|---|---|
| | | | | vorher | nach $H_2O_2$-Abbau | | $O_2$ | $N_2$ | IPA/$H_2O$ | |
| | | % | °C | mPas | | bar | Vol-% | | | |
| 1 | 0,77 | 1,43 | 70 | 560 | 24 | 2 | 33 | 31 | 36 | ja |
| 2 | 0,80 | 1,42 | 70 | 560 | 30 | ca. 2 | 36 | 22 | 42 | ja |
| 3 | 0,72 | 4,35 | 70 | 460 | 7 | 1 | 86 | 6 | 8 | ja |
| 4 | 0,73 | 1,45 | 70 | 645 | 15 | 1,1 | 29 | 60 | 11 | ja |
| 5 | 0,90 | 4,76 | 75 | 300 | 18 | 1 | 45 | 31 | 24 | ja |
| 6 | 0,87 | 1,60 | 55 | 645 | 18 | 1,1 | 42 | 44 | 14 | ja |
| 7 | 0,82 | 1,60 | 60 | 300 | 33 | 0,9 | 50 | 5 | 45 | ja |

1) vgl. P. Voigtsberger u. D. Conrad, Bericht Nr. 1980/68; 4-333, "Zündversuche mit Isopropanol/Sauerstoff/Stick-stoff-Gemischen", Bundesanstalt für Materialprüfung (BAM), Berlin, 1968.

IPA = Isopropanol

EP 0 676 415 B1

Tabelle 2

| Gasprobe | Maische | Druck im Dampfraum | Zusammensetzung der Dampfraumatmosphäre | | | | explosionsfähig? [1] |
|---|---|---|---|---|---|---|---|
| | Temp. | | $O_2$ | $N_2$ | IPA | $H_2O$ | |
| Nr. | °C | mbar | Vol-% | | | | |
| 1 | 68 | 1000 | 5 | 73 | 15 | 7 | nein |
| 2 | 72 | 1000 | 11 | 51 | 29 | 9 | nein |
| 3 | 70 | 975 | 9 | 36 | 45 | 10 | nein |
| 4 | 75 | 1000 | 5 | 8 | 68 | 19 | nein |
| 5 | 80 | 1000 | - | - | 74 | 26 | nein |

*Title (spanning full table):* Temperatur- und Druckverlauf sowie Zusammensetzung der Dampfraumatmosphäre bei oxidativem Abbau mittels festem $NaBO_2 \cdot H_2O_2 \cdot 3H_2O$:

1) Siehe Fußnote 1 zu Tabelle 1

Tabelle 3:

*Title (spanning full table):* Abhängigkeit der Depolymerisationswirkung vom Perborat-Tetrahydrateinsatz. Zugabe des Perborats als Kristallsuspension in 85 %igem Isopropanol.

| Bsp. | Suspensions-Isopropanol (85 %ig) bezogen auf | | $NaBO_2 \cdot H_2O_2 \cdot 3H_2O$ bezogen auf | | Veretherungsgrad DS | mittlere Molmasse | Viskosität |
|---|---|---|---|---|---|---|---|
| | $NaBO_2 \cdot H_2O_2 \cdot 3H_2O$ (kristallin) | | Zellstoff (lufttrocken) | CMC | | | |
| | Gewichtsteile | | % | | | g/mol | mPa·s |
| 3 | 3 | | 4,20 | 3,1 | 0,76 | 63000 | 35 |
| 4 | 3 | | 8,42 | 6,2 | 0,81 | 46000 | 1 7 |
| 5 | 2,5 | | 13,50 | 9,9 | 0,76 | 41000 | 13 |
| 6 | 2 | | 20,15 | 14,8 | 0,81 | 36000 | 10 |

Tabelle 4

*Title (spanning full table):* Depolymerisation einer gereinigten CMC[1] mit $NaBO_2 \cdot H_2O_2 \cdot 3H_2O$ (kristallin eingesetzt) in Abhängigkeit von der Temperatur und der Zeit

| Bsp. | Temperatur bei der Depolymerisation | Dauer der Depolymerisation | Viskosität | mittlere Molmasse der depolymerisierten Carboximethylcellulose |
|---|---|---|---|---|
| | °C | Minuten | mPa·s | g/mol |
| 7 | 60 | 30 | 25 | 54000 |
| | | 60 | 15 | 45000 |
| | | 90 | 11 | 37000 |
| 8 | 80 | 30 | 8 | 31000 |
| | | 60 | 7 | 27000 |
| | | 90 | 6 | 25000 |

1) Tylose C 6000® der Hoechst AG, Molmasse im Mittel rund 200000 g/mol; Viskosität 9180 mPa·s

Tabelle 5

| Ansatz | Mol NaOH pro Grundmol[1] der Carboximethylcellulose | verwendete Menge konzentrierte 49,5 %ige Natronlauge | Dauer der Depolymerisation | Viskosität | mittlere Molmasse der depolymerisierten Carboximethylcellulose |
|---|---|---|---|---|---|
| Abhängigkeit der Depolymerisation (mittels $NaBO_2 \cdot H_2O_2 \cdot 3H_2O$) vom anwesenden Alkaligehalt | | | | | |
| | | Gramm | Minuten | mPa·s | g/mol |
| A | 0,21 | 9 | 30 | 25 | 54000 |
| | | | 60 | 15 | 45000 |
| | | | 90 | 11 | 37000 |
| B | 0,42 | 18 | 30 | 14 | 44000 |
| | | | 60 | 6 | 25000 |
| | | | 90 | 4 | 13000 |

1) Die Grundmolmasse entspricht der mittleren Molmasse der Carboximethylcellulose-Monomereinheit.

Tabelle 6: Vorteilhafte Auswirkung der Erfindung auf die Trocknung niedrigviskoser Celluloseether im Anschluß an die Depolymerisation, dargestellt an CMC

| | Peroxid, gerechnet als $H_2O_2$ (bezogen auf luft- trockenen Zellstoff) | Produktkenndaten | | | | | | | |
|---|---|---|---|---|---|---|---|---|---|
| | | DS | salzfrei | mittlere Molmasse | nach Ausdämpfen, salzhaltig, lufttrocken | | | | |
| | | | Viskosität | | Na-Gly- kolat | NaCl | Feuchte | Viskosität (5 %ige wäßrige Lösung) | Bewertung des Pro- duktes "nach Ausdämpfen" |
| | % | | mPa's | g/mol | % | | | mPa s | |
| Einsatz von $NaBO_2 \cdot H_2O_2 \cdot 3H_2O$ (erfindungsgemäß) | 5,0 | 0,83 | vor Abbau: 6300 nach Abbau: 4 | 190000 13000 | 10,9 | 18,4 | 3,8 | 8 | sehr gut |
| Einsatz von 15 %igem Wasserstoffperoxid (Vergleich) | 5,0 | 0,81 | vor Abbau: 520 nach Abbau: 5 | 129000 18000 | 13,0 | 21,2 | 5,2 | 25 | nicht brauch- bar |

EP 0 676 415 B1

Tabelle 7: Verwendung von $NaBO_2 H_2O_2 3H_2O$ in Kombination mit TAED zur Depolymerisation

| Versuchs-bezeichnung | Temperatur bei Abbau | $NaBO_2 H_2O_2 3H_2O$ | TAED | Wasserstoffperoxid 12,5 %ige Lösung | DS | Endviskosität salzfrei, | Mittlere Mol-masse |
|---|---|---|---|---|---|---|---|
| | °C | g/2000 g luftrockenem Zellstoff | | | | mPa·s | g/mol |
| Erfindungsgemäß | | | | | | | |
| A | 50 | 165[1] | 125[1] | - | 0,76 | 20 | 51000 |
| B | 70 | 165[1] | 125[1] | - | 0,78 | 7 | 27000 |
| Vergleich mit Wasserstoffperoxid: | | | | | | | |
| C | 50 | - | 125 | 300 | 0,78 | 340 | 120000 |
| D | 70 | - | 125 | 300 | 0,76 | 90 | 85000 |

1) Suspendiert in 825 g destilliertem Wasser

EP 0 676 415 B1

EP 0 676 415 B1

Tabelle 8: Depolymerisation von CMHEC mittels $NaBO_2H_2O_23H_2O$ bei 70°C in Abhängigkeit von der Zeit und der Portionierung des Perborats

| Probe | Abbau-dauer | $NaBO_2H_2O_23H_2O$ Portion | Summe $NaBO_2H_2O_23H_2O$ | | Viskosität | Bemerkung | Mittlere Molmasse |
|---|---|---|---|---|---|---|---|
| | min | g | g | % bezogen auf CMHEC | mPas | | g/mol |
| 1 | 0 | - | - | | 105 | "vor Abbau" | 100000 |
| 2 | 15 | 30 | 30 | 1,9 | 13 | "nach Abbau" | 50000 |
| 3 | 30 | 30 | 60 | 3,8 | 7 | "nach Abbau" | 32000 |
| 4 | 45 | 30 | 90 | 5,7 | 4 | "nach Abbau" | 16000 |

Tabelle 9: Depolymerisation von CMHEC mittels Natrium-Perborat-Monohydrat bei 70°C in Abhängigkeit von der Zeit und der Portionierung des Perborats.

| Probe | Abbau-dauer | $NaBO_2 \cdot H_2O_2$ Portion | Summe $NaBO_2 \cdot H_2O_2$ | | Viskosität | Bemerkung | mittlere Molmas-se |
|-------|-------------|-------------------------------|------|------|-----------|-----------|------|
| | min | g | g | % bezogen auf CMHEC | mPa·s | | g/mol |
| A | 0 | - | - | | - | "vor Abbau" | 117000 |
| B | 15 | 20 | 20 | 1,27 | 20 | "nach Abbau" | 44000 |
| C | 30 | 20 | 40 | 2,53 | 40 | "nach Abbau" | 27000 |
| D | 45 | 20 | 60 | 3,80 | 60 | "nach Abbau" | 8000 |

EP 0 676 415 B1

EP 0 676 415 B1

Tabelle 10: Depolymerisation von HEC unter Verwendung von $NaBO_2 H_2O_2 3H_2O$, von $NaBO_2 H_2O_2 . 3H_2O$ + TAED und $NaBO_2 H_2O_2$. Peroxidgruppeneinsatz (gerechnet als $H_2O_2$) je 2 %, bezogen auf luftrockenen Zellstoff. Zellstoffbasis pro Abbauversuch sind 333 g Fichtenholzzellstoff. Abbautemperatur: 70°C, Abbauzeit: 30 Minuten.

| Probe | Art des Perborates | Gesamtmenge | | Zusatz | Zusatz-menge | Viskosität | mittlere Molmasse | Bemerkungen |
|---|---|---|---|---|---|---|---|---|
| | | g | % bezogen auf HEC | | g | mPa s | g/mol | |
| 1 | - | - | - | - | - | 400 | 144000 | "vor Abbau" |
| 2 | $NaBO_2 H_2O_2 3H_2O$ | 30 | 5,8 | - | - | 3,1 | 7100 | "nach Abbau" |
| 3 | $NaBO_2 H_2O_2 3H_2O$ | 30 | 5,8 | TAED | 22 | 2,7 | 6500 | "nach Abbau" |
| 4 | $NaBO_2 H_2O_2$ | 20 | 3,9 | - | - | 4,4 | 19700 | "nach Abbau" |

Tabelle 11:

| Depolymerisation von CMC mit $NaBO_2 \cdot H_2O_2$ bei 70°C. Abbaudauer: 30 Minuten. Der Veretherungsgrad (DS) der CMC beträgt 0,76. | | | | |
|---|---|---|---|---|
| Probe | $NaBO_2 \cdot H_2O_2$-Zugabe | | Viskosität | Mittlere Molmasse | Bemerkungen |
| | g | % bezogen auf CMC | mPa·s | g/mol | |
| A | - | - | 720 | 138000 | "vor Abbau" |
| B | 110 | 4,2 | 10 | 35000 | "nach Abbau" |

**Patentansprüche**

1. Verfahren zur Herstellung niedermolekularer Polysaccharidether durch oxidativen Abbau höhermolekularer Polysaccharidether mit einer mittleren Molmasse $\overline{M}\eta$ von 10000 bis 350000 g/mol in Maische oder in Suspension, dadurch gekennzeichnet, daß man den höhermolekularen Polysaccharidether in Maische oder in Suspension vorlegt, ein Perborat oder eine Mischung aus Perborat und Perborataktivator zufügt und den oxidativen Abbau bei einer Temperatur zwischen 25 und 90°C durchführt.

2. Verfahren nach Anspruch 1, dadurch gekennzeichnet, daß als höhermolekulare Polysaccharidether Celluloseether, Stärkeether oder Galactomannanether eingesetzt werden.

3. Verfahren nach Anspruch 2, dadurch gekennzeichnet, daß als Celluloseether Carboxialkylcelluloseether, Hydroxialkylcelluloseether, Alkylcelluloseether, Alkylhydroxialkylcelluloseether, Alkylhydroxialkylcarboxialkylcelluloseether, Sulfoalkylcelluloseether, Carboxyalkylsulfoalkylcelluloseether, Alkylhydroxialkylsulfoalkylcelluloseether, Alkyloxihydroxialkylhydroxialkylcelluloseetheroder Hydroxialkylsulfoalkylcelluloseether eingesetzt werden.

4. Verfahren nach Anspruch 3, dadurch gekennzeichnet, daß der Celluloseether eine $C_1$-$C_4$-Alkylgruppe enthält.

5. Verfahren nach Anspruch 2, dadurch gekennzeichnet, daß als Stärkeether Carboxialkylstärkeether, Hydroxialkylstärkeether oder deren Mischether eingesetzt werden.

6. Verfahren nach einem der Ansprüche 1 bis 5, dadurch gekennzeichnet, daß als Perborate Alkaliperborate, Erdalkaliperborate oder deren Mischung eingesetzt werden.

7. Verfahren nach Anspruch 6, dadurch gekennzeichnet, daß als Alkaliperborat Natriumperborat-Tetrahydrat und/oder Natriumperborat-Monohydrat eingesetzt wird.

8. Verfahren nach einem der Ansprüche 1 bis 7, dadurch gekennzeichnet, daß die Perborate oder die Perborat/Perborataktivator-Mischungen in Form einer Lösung, Kristallsuspension oder als Feststoff zugesetzt werden.

9. Verfahren nach Anspruch 8, dadurch gekennzeichnet, daß als Lösungsmittel Wasser verwendet wird.

10. Verfahren nach Anspruch 8, dadurch gekennzeichnet, daß als Suspensionsmittel für die Kristallsuspension Wasser, wassermischbare organische Lösungsmittel oder wäßrige Mischungen davon eingesetzt werden.

11. Verfahren nach Anspruch 10, dadurch gekennzeichnet, daß als wassermischbare organische Lösungsmittel $C_1$-$C_6$-Alkohole, Ether oder Ketone eingesetzt werden.

12. Verfahren nach Anspruch 8 oder 9, dadurch gekennzeichnet, daß die wäßrige Lösung bis 2,5 Gew.-% Perborat, bezogen auf die Lösung, enthält.

13. Verfahren nach Anspruch 8 oder 10, dadurch gekennzeichnet, daß das Verhältnis Perborat oder Perborat/Perboraktivator-Mischung zu Suspensionsmittel 1:2 bis 1:15 beträgt.

14. Verfahren nach einem der Ansprüche 1 bis 13, dadurch gekennzeichnet, daß als Perboraktivator Acylgruppen

enthaltende Perborataktivatoren eingesetzt werden.

**15.** Verfahren nach einem der Ansprüche 1 bis 14, dadurch gekennzeichnet, daß die Molanzahl Perborat, bezogen auf den Perborataktivator, gleich der Molanzahl Peroxisäure ist, die sich aus einem Mol Perborataktivator bildet.

**16.** Verfahren nach einem der Ansprüche 1 bis 15, dadurch gekennzeichnet, daß die Menge des Perborats 0,1 bis 20 Gew.-%, bezogen auf die Trockensubstanz des eingesetzten höhermolekularen Polysaccharidethers, beträgt.

**17.** Verfahren nach einem der Ansprüche 1 bis 16, dadurch gekennzeichnet, daß der oxidative Abbau bei einem alkalischen pH-Wert oberhalb 7 erfolgt.

**18.** Verfahren nach einem der Ansprüche 1 bis 17, dadurch gekennzeichnet, daß als Anmaischmittel oder Suspensionsmittel für den höhermolekularen Polysaccharidether $C_1$-$C_6$-Alkohole, Ether, Ketone oder wäßrige Mischungen daraus verwendet werden.

**19.** Verfahren nach Anspruch 18, dadurch gekennzeichnet, daß das Gewichtsverhältnis Anmaischmittel zu höhermolekularen Polysaccharidether 1:1 bis 5:1 beträgt.

**20.** Verfahren nach Anspruch 18, dadurch gekennzeichnet, daß das Gewichtsverhältnis Suspensionsmittel zu höhermolekularem Polysaccharidether 6:1 bis 25:1 beträgt.

**21.** Verfahren nach einem der Ansprüchen 1 bis 20, dadurch gekennzeichnet, daß der Wassergehalt der Reaktionsmischung während des oxidativen Abbaus 30 Gew.-% nicht überschreitet.

**22.** Verfahren nach einem der Ansprüchen 1 bis 21, dadurch gekennzeichnet, daß nach Beendigung des oxidativen Abbaus das Anmaischmittel durch Destillation aus der Maische entfernt wird.

**23.** Verfahren nach Anspruch 1, dadurch gekennzeichnet, daß ein höhermolekularer Polysaccharidether eingesetzt wird, der in bekannter Weise durch Alkalisierung und Veretherung von einem Polysaccharid gewonnen wird und anschließend einem oxidativen Abbau gemäß Anspruch 1 ohne Isolierung des zuvor hergestellten höhermolekularen Polysaccharidethers unterworfen ist.

**Claims**

**1.** A process for the preparation of a low molecular weight polysaccharide ether by oxidative degradation of relatively high molecular weight polysaccharide ethers having an average molecular mass Mn of from 10,000 to 350,000 g/mol in slurry or in suspension, which comprises initially introducing the relatively high molecular weight polysaccharide ether in slurry or in suspension, adding a perborate or a mixture of perborate and perborate activator, and carrying out the oxidative degradation at a temperature of between 25 and 90°C.

**2.** The process as claimed in claim 1, wherein the relatively high molecular weight polysaccharide ether employed is a cellulose ether, starch ether or galactomannan ether.

**3.** The process as claimed in claim 2, wherein the cellulose ether employed is a carboxyalkylcellulose ether, hydroxyalkylcellulose ether, alkylcellulose ether, alkylhydroxyalkylcellulose ether, alkylhydroxyalkylcarboxyalkylcellulose ether, sulfoalkylcellulose ether, carboxyalkylsulfoalkylcellulose ether, alkylhydroxyalkylsulfoalkylcellulose ether, alkyloxyhydroxyalkylhydroxyalkylcellulose ether or hydroxyalkylsulfoalkylcellulose ether.

**4.** The process as claimed in claim 3, wherein the cellulose ether contains a $C_1$-$C_4$-alkyl group.

**5.** The process as claimed in claim 2, wherein the starch ether employed is a carboxyalkylstarch ether, hydroxyalkylstarch ether or a mixed ether thereof.

**6.** The process as claimed in any one of claims 1 to 5, wherein the perborate employed is an alkali metal perborate, an alkaline earth metal perborate or a mixture thereof.

**7.** The process as claimed in claim 6, wherein the alkali metal perborate employed is sodium perborate tetrahydrate and/or sodium perborate monohydrate.

8. The process as claimed in any one of claims 1 to 7, wherein the perborate or the perborate/perborate activator mixture is added in the form of a solution, a crystal suspension or as a solid.

9. The process as claimed in claim 8, wherein the solvent used is water.

10. The process as claimed in claim 8, wherein the suspension medium employed for the crystal suspension is water, a water-miscible organic solvent or an aqueous mixture thereof.

11. The process as claimed in claim 10, wherein the water-miscible organic solvent employed is a $C_1$-$C_6$ alcohol, an ether or a ketone.

12. The process as claimed in claim 8 or 9, wherein the aqueous solution contains up to 2.5 % by weight of perborate, based on the solution.

13. The process as claimed in claim 8 or 10, wherein the ratio of perborate or perborate/perborate activator mixture to suspension medium is from 1:2 to 1:15.

14. The process as claimed in any one of claims 1 to 13, wherein the perborate activator employed is a perborate activator which contains acyl groups.

15. The process as claimed in any one of claims 1 to 14, wherein the molar quantity of perborate, based on the perborate activator, is equal to the molar quantity of peroxy acid which is formed from one mole of perborate activator.

16. The process as claimed in any one of claims 1 to 15, wherein the quantity of perborate is from 0.1 to 20 % by weight, based on the dry weight of the relatively high molecular weight polysaccharide ether employed.

17. The process as claimed in any one of claims 1 to 16, wherein the oxidative degradation is carried out at an alkaline pH above 7.

18. The process as claimed in any one of claims 1 to 17, wherein the slurrying medium or suspension medium used for the relatively high molecular weight polysaccharide ether is a $C_1$-$C_6$ alcohol, an ether, a ketone or an aqueous mixture thereof.

19. The process as claimed in claim 18, wherein the weight ratio of slurrying medium to relatively high molecular weight polysaccharide ether is from 1:1 to 5:1.

20. The process as claimed in claim 18, wherein the weight ratio of suspension medium to relatively high molecular weight polysaccharide ether is from 6:1 to 25:1.

21. The process as claimed in any one of claims 1 to 20, wherein the water content of the reaction mixture during the oxidative degradation does not exceed 30 % by weight.

22. The process as claimed in any one of claims 1 to 21, wherein the slurrying medium is removed from the slurry by distillation after the end of the oxidative degradation.

23. The process as claimed in claim 1, wherein a relatively high molecular weight polysaccharide ether is employed which is obtained from a polysaccharide in a known manner, by alkali treatment and etherification, and is subsequently subjected to an oxidative degradation as claimed in claim 1 without isolation of the relatively high molecular weight polysaccharide ether prepared beforehand.

## Revendications

1. Procédé de préparation d'éthers de polysaccharides de bas poids moléculaire par décomposition oxydante d'éthers de polysaccharides de plus haut poids moléculaire avec une masse molaire moyenne $\overline{M\eta}$ de 10000 à

350000 g/mol dans un moût ou une suspension, caractérisé en ce que l'on prépare l'éther de polysaccharide de plus haut poids moléculaire dans un moût ou une suspension, on ajoute un perborate ou un mélange de perborate et d'activateur de perborate et on réalise la décomposition oxydante à une température entre 25 et 90°C.

2.  Procédé selon la revendication 1, caractérisé en ce que l'on utilise comme éthers de polysaccharide de plus haut poids moléculaire des éthers de cellulose, des éthers d'amidon ou des éthers de galactomannane.

3.  Procédé selon la revendication 2, caractérisé en ce que l'on utilise comme éther de cellulose, un éther de carboxyalkylcellulose, un éther d'hydroxyalkylcellulose, un éther d'alkylcellulose, un éther d'alkylhydroxyalkylcellulose, un éther d'alkylhydroxyalkylcarboxyalkylcellulose, un éther de sulfoalkylcellulose, un éther de carboxyalkylsulfoalkylcellulose, un éther d'alkylhydroxyalkylsulfoalkylcellulose, un éther d'alkyloxyhydroxyalkylhydroxyalkylcellulose ou un éther d'hydroxyalkylsulfoalkylcellulose.

4.  Procédé selon la revendication 3, caractérisé en ce que l'éther de cellulose contient un groupe alkyle en $C_1$-$C_4$.

5.  Procédé selon la revendication 2, caractérisé en ce qu'on utilise comme éther d'amidon un éther de carboxyalkylamidon, un éther d'hydroxyalkylamidon ou les éthers mixtes de ceux-ci.

6.  Procédé selon l'une des revendications 1 à 5, caractérisé en ce qu'on utilise comme perborates des perborates alcalins, des perborates alcalino-terreux ou des mélanges de ceux-ci.

7.  Procédé selon la revendication 6, caractérisé en ce qu'on utilise comme perborate alcalin le perborate de sodium tétrahydraté et/ou le perborate de sodium monohydraté.

8.  Procédé selon l'une des revendications 1 à 7, caractérisé en ce que les perborates ou les mélanges perborate/activateur de perborate sont ajoutés sous la forme d'une solution, d'une suspension de cristaux ou sous la forme de matière solide.

9.  Procédé selon la revendication 8, caractérisé en ce qu'on utilise l'eau comme solvant.

10. Procédé selon la revendication 8, caractérisé en ce qu'on utilise comme milieu de suspension pour la mise en suspension des cristaux l'eau, des solvants organiques miscibles à l'eau ou des mélanges aqueux de ceux-ci.

11. Procédé selon la revendication 10, caractérisé en ce qu'on utilise comme solvants organiques miscibles à l'eau des alcools en $C_1$-$C_6$, des éthers ou des cétones.

12. Procédé selon la revendication 8 ou 9, caractérisé en ce que la solution aqueuse contient jusqu'à 2,5% en poids de perborate, par rapport à la solution.

13. Procédé selon la revendication 8 ou 10, caractérisé en ce que le rapport du perborate ou du mélange perborate/activateur de perborate par rapport au milieu de suspension est de 1:2 à 1:15.

14. Procédé selon l'une des revendications 1 à 13, caractérisé en ce qu'on utilise comme activateur de perborate des activateurs de perborate contenant des groupes acyle.

15. Procédé selon l'une des revendications 1 à 14, caractérisé en ce que le nombre de moles de perborate, par rapport à l'activateur de perborate, est égal au nombre de moles de peroxyacide qui se forme à partir d'une mole d'activateur de perborate.

16. Procédé selon l'une des revendications 1 à 15, caractérisé en ce que la quantité du perborate est de 0,1 à 20% en poids, par rapport à la substance sèche de l'éther de polysaccharide de poids moléculaire plus élevé utilisé.

17. Procédé selon l'une des revendications 1 à 16, caractérisé en ce que la décomposition oxydante est réalisée à une valeur alcaline de pH au-dessus de 7.

18. Procédé selon l'une des revendications 1 à 17, caractérisé en ce qu'on utilise comme milieu de formation du moût ou milieu de suspension pour les éthers de polysaccharide de poids moléculaire plus élevé des alcools en $C_1$-$C_6$, des éthers, des cétones ou des mélanges aqueux de ceux-ci.

19. Procédé selon la revendication 18, caractérisé en ce que le rapport en poids du milieu de formation du moût par rapport aux éthers de polysaccharide de poids moléculaire plus élevé est de 1:1 à 5:1.

20. Procédé selon la revendication 18, caractérisé en ce que le rapport en poids du milieu de suspension par rapport à l'éther de polysaccharide de poids moléculaire plus élevé est de 6:1 à 25:1.

21. Procédé selon l'une des revendications 1 à 20, caractérisé en ce que la teneur en eau du mélange réactionnel ne dépasse pas 30% en poids pendant la décomposition oxydante.

22. Procédé selon l'une des revendications 1 à 21, caractérisé en ce qu'après la fin de la décomposition oxydante, le milieu de suspension du moût est séparé du moût par distillation.

23. Procédé selon la revendication 1, caractérisé en ce que l'on utilise un éther de polysaccharide de poids moléculaire plus élevé, qui est obtenu de manière connue par alcalinisation et éthérification d'un polysaccharide et subit ensuite une décomposition oxydante selon la revendication 1 sans isoler l'éther de polysaccharide de plus haut poids moléculaire préparé précédemment.